# EUROPEAN PATENT APPLICATION

(11) **EP 2 418 791 A1**
(43) Date of publication of application: **15.02.2012**
(21) Application number: 10172410.2
(22) Date of filing: 10.08.2010
(51) Int. Cl.: H04H 20/10, H04H 20/24, H04H 20/26, H04H 60/11, H04H 60/85

(54) **Method of using different transmission standards and a broadcast receiving device**

(71) Applicant: Vodafone Holding GmbH, 40213 Düsseldorf (DE)
(72) Inventor: Dietz, Ulrich, 81669 München (DE)
(74) Representative: Müller & Schubert

(57) **Abstract**

The present invention relates to mobile radio device which is capable of receiving "regular" radio programs as well as web-based radio programs. As long as a radio station can be received via antenna (for example if the radio station is listed within a RDS-list) said radio station is received in such a way. In this case the web-based radio program of said radio station is not considered. However if the user wants to listen to a radio station which cannot be received via antenna any longer, the system switches to the web-based radio program such that the user can receive said radio station via internet.

The present invention allows receiving radio programs within a mobile radio device in a cheap and network optimised manner.

## Description

The present invention relates to a method of using different transmission standards in a broadcast receiving device according to the preamble of claim 1, a switching device for switching between the different transmission standards according to the preamble of claim 13 and a broadcast receiving device according to the preamble of claim 15.

It is known in general prior art, that different transmission standards can be manually triggered with one broadcast receiving device. It is possible to use one transmission standard, for example the conventional terrestrial transmission standard for receiving broadcast information also known as frequency modulation (FM) radio. Furthermore it is possible to use another transmission standard, for example a web-based like the World Wide Web - also known as internet - for receiving the same broadcast information on the same broadcast receiving device. In such case both transmission standards, FM radio and web-based radio can be used in one receiving device.

However, switching between the different transmission standards is only manually possible. An automated switching from one transmission standard to another transmission standard according to the availability of the transmission standard is not yet known.

It is the object of the present invention to provide a method and a switching device for switching at defined switching conditions between different transmission standards. Furthermore it is another object of the present invention to provide a broadcast receiving device comprising a switching device for switching between different transmission standards.

In accordance with the present invention, this object is solved by the method with the features of independent claim 1, the switching device with the features of independent claim 13 as well as the broadcast receiving device with the features of independent claim 15.

Additional features and details become apparent from the dependent claims, from the description and from the drawings. Features and details described in connection with the method according to the first aspect of the invention are, of course, also valid in connection with the switching device according to the second aspect of the invention, and vice versa. Features and details described in the connection with the method and the switching device according to the first and second aspect of the invention are, of course, also valid in connection with the broadcast receiving device according to the third aspect of the invention, and vice versa. Thus, in respect of the disclosure of one of the aspects of the invention, full reference is always made reciprocally to the disclosure of each other aspect of the invention.

Pursuant to a first aspect of the present invention a method for using different transmission standards in a broadcast receiving device is provided. This method is characterised in that the broadcasting receiving device comprises a switching device, and that the switching device switches at defined switching conditions between the different transmission standards.

The method uses transmission standards. These transmission standards are used to transmit information or contents from one transmitting station to a receiving station. The transmission standards according to the present invention can be any types of known standards like unicast, multicast and broadcast transmission standards or prospectively developed standards for transmitting information from a transmitting to a receiving station.

The method is not limited to specific types of transmission standards. Transmission standards can be for example Frequency Modulation (FM), Short Wave radio (SW), Medium Wave (MW), World Wide Web (Internet), Digital Enhanced Cordless Telecommunications (DECT), General Packet Radio Service (GPRS), Global System for Mobile Communication (GSM), High Speed Circuit Switched Data (HSCSD), Universal Mobile Telecommunications System (UMTS), Bluetooth, Wireless Application Protocol (WAP), Wireless Local Area Network (WLAN), all Digital Video Broadcasting, like DVB-S, DVB-S2, DVB-C, DVB-C2, DVB-T, DVB-T2, DVB-H, DVB-IPI, DVB-RC(S/C/T), DVB-SI, DVB-SH, Digital Audio Broadcasting, like DAB, DAB+, satellite radio or the like. The present invention is not limited to these transmissions standards.

In a preferred embodiment one transmission standard is a terrestrial transmission standard. One embodiment of a terrestrial transmission standard is known as frequency modulation (FM) transmission standard. According to another preferred embodiment a second transmission standard is a web-based transmission standard, for example the World Wide Web (Internet).

The invention is also not limited to specific types of transmitted information or contents. Examples of transmitted information or contents are described further below.

According to the present invention the transmission standards are processed using a broadcast receiving device. In particular, a broadcast receiving device comprises features to receive or retrieve information or contents send via a transmission standard and to identify the transmission standard. Preferably, with the broadcast receiving device it can be also possible to display the received information or the content. "Display" in connection with the present invention particularly means a transmission of the information or the content in a graphically manner by pictures, letters, words or the like or phonetic by sounds, tone or the like. "Display" in connection with the invention preferably means all possibilities of transmission of information to a user of a broadcast receiving device.

The invention is not limited to specific broadcast receiving devices. A broadcast receiving device could be for example a radio, a mobile communication device as a mobile phone, a cell phone, a personal computer, a notebook, a personal digital assistant, a navigation system, a calculation unit or the like. The broadcast receiving device can be a mobile device or an immobile device. A mobile device is a device which can be moved and/or carried and/or transported easily. A device can be immobile for example because the device is fixed and so is a part of an immobile device or the weight of the device is too high for moving or transporting the device. A device can also be immobile because in the general usage the device is immobile and is not moved or transported.

The switching device according to the invention presents a device for switching between different transmission standards. The switching device enables switching from one transmission standard to another transmission standard. "Switching" in connection with the invention preferably means a switching procedure from one transmission standard to another transmission standard. "Switching" in connection with the invention is also understood in way that a switch from one transmission standard to another transmission standard can be performed by a cross-fading procedure.

The broadcast receiving device uses a first transmission standard and after the switching procedure a second transmission standard which is different and varying from the previously used first transmission standard.

The switching procedure is triggered or started if defined switching conditions are fulfilled. The switching conditions are preferably defined before the switching procedure is triggered or started. Details concerning the switching conditions are described further below. The switching procedure can be performed for example immediately when the switching conditions are fulfilled or after a defined time slot or break or by use of a cross-fading procedure. It is also possible that the switching procedure is used to play and/or show commercials or advertisements during the switching procedure. Preferably, the content is replaced by providing for instance commercials via web-based transmission standards that are played and/or showed instead of the original commercials. The content of the commercials or advertisements can advantageously be linked to the received content. More preferred playing and/or showing commercials is used during the switching procedure or cross-fading procedure. Preferably playing and/or showing the commercials can be performed by a slip-streaming procedure based on the content delivered by the transmission standard.

According to one preferred embodiment the switching device switches at defined switching conditions between the different transmission standards automatically or upon request. In particular, automatically is understood in a way that the switching device switches between the different transmission standards without waiting for an additional switching confirmation or any other confirmation. The switching procedure is initiated, triggered or activated by the switching device automatically at defined switching conditions. It is also possible in a preferred embodiment that the switching device switches between two transmission standards automatically after a defined time slot or break. According to a preferred embodiment of the present invention the switching device switches automatically between a FM transmission standard and a web-based transmission standard.

Also possible is that the switching procedure is performed upon request. In connection with the present invention "upon request" can preferably mean that the switching device informs the user about the actual status or that according the defined switching parameters a switching procedure between the different transmission standards is possible and the user has to confirm the initialisation, triggering or activation of the switching procedure. It is also possible that the user actively requests for a switching procedure between the different transmission standards.

Preferably the switching device switches between contents within the different transmission devices. In connection with the present invention contents are preferably contents which are transmitted from one transmitting station to a receiving station via a transmission standard. "Contents" can be understood in a way, that contents are all transmitted information. The transmitted information or content can be every audio or video related information. The transmitting or receiving station can be part of or separated from a broadcast receiving device.

Preferred, the broadcast receiving device is a radio reception device like a mobile or cell phone or a radio comprising a communication module. The embedded communication module is allocated to a communications network, a mobile radio network, the internet for example. The transmitted content is broadcast information and the switching procedure bases on the broadcast information.

Advantageously, the present invention relates to a method wherein the switching conditions are generated by comparing defined threshold values to detected switching parameter values. Preferably a hysteresis related to the detected switching parameter values can be considered in the switching device. Thus, the signal of the transmission standard does not toggle too much and the switching procedure can be performed more stable. More preferably the switching conditions are generated by comparing one defined threshold value to one detected switching parameter value. In another more preferred embodiment the switching conditions are generated by comparing two or even more defined threshold values to detected switching parameter values.

"Comparing" in the sense of the prevent invention is preferably understood in the way that the values of the detected switching parameters are compared to the defined corresponding threshold value(s).

Advantageously the defined threshold values are set manually. It is also possible that the threshold values are delivered from a transmission station via a transmission standard. It is also possible that the broadcast transmission device or the switching device receive or retrieve the threshold values via a transmission standard.

A threshold value can be any quality parameter of the transmission standard. Preferably the threshold value is a value relating to the signal strength. Also preferred is that the threshold value is a value relating to the signal to noise ratio or a value relating to the time or to the geographical location. The invention is not limited to one type of threshold values. A combination of several threshold values is also possible.

The signal strength in connection with the present invention particularly is the signal strength of transmitted contents with the transmission standard.

A threshold value relating to the time can be the absolute time or the difference between two absolute time spots. It is also possible in a preferred embodiment that duration is defined as a threshold value. Duration could be a time period between a starting and a finishing point.

According to another preferred embodiment a value relating to the geographical location is possible. A geographical location can be a location detected by a location estimation or detecting module, a GPS-module for example. But any other module or possibility for detecting the geographical location is also possible. The geographical location can be detected elsewhere if the graphical location information is forwarded to the broadcast receiving or switching device. It is also possible that the geographical location is detected directly in the broadcast receiving device or in the switching device.

If the switching conditions are generated by comparing a number of threshold values to a corresponding number of detected switching parameter values a combination of the threshold values relating to the signal strength and/or the time and/or the geographical location is possible. Possibly the threshold value related to the signal strength can be compared to the measured signal strength. Alternatively the comparison can be performed for the time or the geographical location or every other defined threshold value and switching parameter value. The comparison can be done firstly for a first threshold value and switching parameter value combination followed by a second different threshold value and switching parameter value combination. Additional comparison combinations are possible.

It is also preferred that different types of threshold values can be weighted. The types of threshold values are considered according to defined preferences. If two types of defined threshold values are compared to corresponding defined switching parameter values and the switching conditions are fulfilled, a switching procedure can to be triggered according to the weighted threshold values and finally the switching device switches according to the weighted threshold values.

For example the switching device compares the time since using a transmission standard and the signal strength of this transmission standard. The switching device compares the time and the signal strength to the corresponding defined threshold values. If the comparisons of both switching parameters result in triggering a switching procedure the switching procedure can be triggered by the preferred threshold value. If for example the signal strength is more preferred or has a higher weight or a higher relevance or the like in contrast to the for example time related switching parameter, the switching devices switches from one broadcast transmission device to another broadcast transmission device because of the signal strength comparison. The weighting and comparison processes are of course possible for any kind of switching processes.

In another preferred embodiment, the switching condition is generated by comparing a threshold value relating to a geographical location to the detected geographical location and the switching procedure is performed in a way, that the switching device switches from the first transmission standard for example FM to the second transmission standard for example the internet when the switching conditions are fulfilled. When detecting another defined geographical location the switching device can switch back from the second transmission (internet) standard to the first transmission standard (FM).

In another embodiment of the invention the switching device detects switching parameter values of at least one first transmission standard and the detected switching parameter values are compared against at least one threshold value related to said first transmission standard by the switching device and the switching device switches to at least one second transmission standard if the detected switching parameter values fall below or exceed or correspond to at least one threshold value related to said first transmission standard.

The switching device detects at least one switching parameter value of at least one switching parameter and compares this switching parameter value to a corresponding threshold value. But of course it is also possible that two or more switching parameter values of at least one switching parameter are compared to the corresponding threshold value. If the switching device detects, that the values of the switching parameter increase or decrease and hence exceed or fall below or correspond to one threshold value the switching device switches from one transmission standard to another transmission standard. Also possible is that more than one switching parameter is considered. When comparing two or more switching parameters with corresponding threshold values the switching device can trigger the switching procedure according the abovementioned preferred weight of the switching parameters or threshold parameters.

Another possibility is that for one switching parameter two different threshold values are defined. The switching device detects, more preferred continuously, at least one value of a defined switching parameter. When comparing for example one detected switching parameter value with a corresponding defined first threshold value and the switching parameter value falls below, exceeds or corresponds to the first defined threshold value the switching device can prepare the switching procedure by for example starting a programme for the switching procedure. When the switching parameter value changes in the following and falls below, exceeds and corresponds to the second defined threshold value the switching device can perform the switching procedure because the switching procedure was already prepared or activated but not finally performed while the first threshold value was reached. Of course the present invention is not limited to one or two defined threshold values of one switching parameter. It is also possible that more threshold values are defined for one switching parameter. Additionally more than one switching parameter can be linked with more than one defined threshold value. The present invention is also not limited to the preparation and performance of the switching procedure. Any other action is also possible. Beyond any combination of switching parameters is possible. A first action, for example the preparation of the switching procedure can be activated by a first switching parameter - for example the signal strength - followed by a second action for example performing the switching triggered by another switching parameter for example the geographical location in which the present invention is not limited to the mentioned switching parameters or the mentioned actions or performances.

More preferred, a threshold value, for example the signal strength of for example a FM signal, is stored in the switching device. As long as the signal strength of the used transmission standard for example FM transmission standard is adequate the switching device uses the FM transmission standard and a second transmission standard like the web-based transmission standard is not considered. As long as the signal strength of the FM transmission standard is substantially higher than a defined threshold value and a second transmission standard is not considered, no reproduction delay of the transmitted content or the information can be observed. For users of mobile phones or radio devices the using of the FM transmission standard for radio information transmission is cheaper, because the transmission of information or contents or data is cheaper than using for example the web-based transmission standard.

Beside, the switching procedure is also possible if the detected switching parameter value falls below or corresponds to the threshold value. Also possible is that more than one detected switching parameter value is compared to more than one threshold value. During the comparison the detected switching parameter values are compared to related defined threshold values. Related to the invention "fall below" is preferably understood in a way, that a parameter has a high value at the beginning and while using a transmission standard the value of the parameter decreases and finally falls below a defined threshold value of the related threshold value. "Exceed" in the matter of the present invention preferably means that the value of a parameter increases and is finally higher than a defined threshold value of the related threshold value. It is also possible that the switching device switches from one transmission standard to another transmission standard if the detected switching parameter corresponds to a defined threshold value. In this case the detected switching parameter can decrease or increase during the process and the switching device switches if the threshold value and the detected switching parameter are equal.

According to another preferred embodiment of the present invention the switching device detects switching parameter values of one first transmission standard and the switching device compares the detected switching parameter values against one threshold value related to said first transmission standard and the switching device switches from one second transmission standard to said first transmission standard if the detected switching parameter values fall below or exceed or correspond to one threshold value related to said first transmission standard.

According to the abovementioned embodiment it is possible that the broadcast receiving device uses a second transmission standard and detects - more preferred continuously - the switching parameter of the first transmission standard. The value of detected switching parameter of the first transmission standard is compared - more preferred continuously - with one or more defined threshold values and if the switching parameter value exceeds, falls below or correspond to a defined threshold value the switching device switches from the second transmission standard to the first transmission standard. The switchback can be motivated because the use of the first transmission standard is cheaper than the use of the second transmission standard. Another motivation can be the reliability of the first transmission standard. Any other motivation for the switchback is also possible. According to the abovementioned preferred embodiment it is possible that the switching procedure is not limited to the fall below, exceed or corresponding of only one switching parameter value or switching parameter. The switching procedure from a second to a first transmission standard can also be triggered due to a combination of switching parameters or switching parameter values. Furthermore, it is possible that the switchback from the second transmission standard to the first transmission standard can be prepared if a first threshold value is reached, exceeded or felt below and finally triggered if a second threshold value is reached, exceeded or felt below.

More preferred two different defined threshold values relating to one detected switching parameter are stored for using a transmission standard, for example the FM transmission standard. These threshold values can be related for example to the signal strength. It is also possible that these threshold values are related to any other possible switching parameter. Also possible is that the value of a detected switching parameter changes during the use of the broadcast receiving device or the use of the switching device. While changing, the detected switching parameter value might exceed or fall below the defined threshold value.

As mentioned above in a preferred embodiment of the present invention the considered transmission standards are the terrestrial and web-based transmission standard. The terrestrial transmission standard is used for receiving radio information. The transmitted radio information preferably contains, beside the conventional radio information, additional information. The additional information is described in detail further below. Preferably, the terrestrial transmission standard is FM, short wave or medium wave. Preferably, the web-based transmission standard is the World Wide Web, the so-called internet.

Usually, the terrestrial transmission standard is available and receivable free of charge and possibly receivable anywhere within a region. In contrast, the web-based transmission standard usually generates costs and maybe is not available anywhere. Another difference between the terrestrial and the web-based transmission standard is the used frequency and the available bandwidth which limits the volume of the transmitted content or information.

Another preferred embodiment of the present invention is that the switching device retrieves and/or receives identification labels of contents related to the terrestrial transmission standard. The switching device retrieves and/or receives identification labels of contents related to the web-based transmission standard and the switching device switches at defined switching conditions between identical or corresponding contents related to the terrestrial and web-based transmission standards according to their identification labels.

The content is transmitted from a transmission station to a receiving station via a transmission standard, whereas a transmission station can also be a receiving station and vice versa. Advantageously the content and additional information or additional content can be transmitted via a slip-streaming procedure.

The transmitted information or content contains beside the main information additional information. The additional information could be identification labels for identifying the content. Preferred the additional information can be a Radio Data System signal (RDS-signal) using terrestrial or FM transmission standard which contains the label of the radio broadcast for identifying the radio broadcast station. The identification label could also be any other type to identify the transmitted content.

More preferred the switching device uses the RDS-signal while using the terrestrial transmission standard and the additional or supporting text of the transmission station using the web-based transmission standard.

Using the web-based transmission standard the transmitted additional information or content can also be an identification label comprising an additional text, an address or an IP-address or the like. Any identification label is possible.

It is also possible that the broadcast receiving device or the switching device retrieve or receive those content identification labels. "Retrieving" is preferably understood in a way that the content identification label is actively retrieved or requested at the transmission station. The retrieving process can be performed by the broadcast receiving device or the switching device. In contrast it is also possible in a preferred embodiment of the present invention that the content identification label is received without asking for the content identification label.

Based on receiving of the identification labels of the transmitted content the switching device is able to switch from content at a first transmission standard to the same content at a second transmission standard.

Preferred the switching device retrieves or receives the identification label of a radio broadcast station using the terrestrial transmission standard. Based on this identification label of the radio broadcast station the switching device is able to switch to a second transmission standard for example the web-based transmission standard and search or look for the same identification label as retrieved or received in the terrestrial transmission standard. After detecting the same identification label in the web-based transmission standard the switching device can switch from the terrestrial transmission standard to the web-based transmission standard, for example because the signal strength decreases or a defined time or a defined geographical location is reached.

Advantageously the switching device comprises an online module and the switching device accesses the internet via the online module. Via the online module the switching device preferably retrieves and/or receives the identification labels of contents related to the web-based transmission standard.

This online module can be any kind of module for accessing the World Wide Web or the internet. The module can be for example a modem or the like. It is also possible that the broadcast receiving device or the switching device contains the online module. Alternatively for accessing the World Wide Web or internet a wireless connection can be installed between the broadcast receiving or switching device and the online module. It is also possible that the online module is allocated by an additional service or an external service.

Preferred the online module is used to look for identical and/or corresponding and/or matching identification labels transmitted via the terrestrial transmission standard. More preferred the switching device comprises an online module and while using the terrestrial or FM transmission standard the RDS signal is identified. Using the online module the switching device uses the RDS signal to find the corresponding label in the World Wide Web or the internet. If the switching device retrieves or receives the corresponding label, the switching device can switch from the first transmission standard to a second transmission standard.

Preferred the switching device comprises a database. The identification labels of contents related to the transmission standards are stored within this database. Possibly only the identification label of one content of one transmission standard is stored in the database. But it is also possible that the identification labels of more than one, preferred of all contents of one transmission standard are stored within the database. More preferred all identification labels of the contents of all considered transmission standards are stored within the database. In such a case a direct connection between one content of the first transmission standard with the same content of the second transmission standard can be stored. With such a system the switching between the transmission standards can be performed faster.

It is not necessary that the database is arranged within the switching or broadcast receiving device. It is only necessary that a connection between the switching or broadcast receiving device and the database exists. This connection can exist permanent by or only if necessary or upon request. The connection can be established automatically or upon request. Preferred the database is arranged in the switching device. More preferred the database is arranged in the switching device which is located in the broadcast receiving device.

In particular, the invention describes a way to connect traditional (FM) radio with its regional representation and mobile web-based radio in a way the mobile web-based radio is started and synchronizes with FM based on identifiers sent out on FM for example RDS.

According to a preferred embodiment the present invention could be described as follows:
A user drives around the location A and is listening the terrestrial radio station ABC 88.8. The FM-and-Web-Radio unit has scanned all FM channels available including the alternative frequencies of ABC 88.8 announced via RDS signal. Once the driver is leaving the location A on the way to location B, the system has already, based on the RDS information, tuned in World Wide Web access to ABC 88.2 and offers either the option to continue with listening via World Wide Web radio or continues anyway as this reflects the driver's choice.

To make switching easy a mechanism can be defined that, once the FM signal gets weak, the FM-and-Web-Radio unit starts accessing the World Wide Web radio. Since World Wide Web radio can be stored - for example for seconds - a matching mechanism synchronizes both FM and World Wide Web so that the switch from one to the other source can be achieved without or preferred without any distortion in the audio signal.

If the driver listens to a popular World Wide Web radio stream the FM-and-Web-Radio unit may listen and scan for the RDS signal of that particular station and offer a switch back to FM if available.

According to a second aspect, present invention relates to a switching device for switching between different transmission standards. The switching device comprises an interface to each transmission standard and means for switching at defined switching conditions between the different transmission standards.

With the switching device a switch between different transmission standards is possible. More preferred the switching device comprises means for performing a switching procedure according the abovementioned details, relating to the first aspect of the present invention.

According to a third aspect, the present invention relates to a broadcast receiving device comprising a switching device. Preferred the broadcast receiving device comprises a switching device according the abovementioned details, relating to the first and second aspects of the present invention.

In particular, the present invention relates to mobile radio device which is capable of receiving "regular" radio programs as well as web-based radio programs. As long as a radio station can be received via antenna - for example if the radio station is listed within a RDS-list - said radio station is received in such a way. In this case the web-based radio program of said radio station is not considered. However if the user wants to listen to a radio station which cannot be received via antenna any longer, the system switches to the web-based radio program such that the user can receive said radio station via internet.

The present invention allows receiving radio programs within a mobile radio device in a cheap and network optimised manner.

For a better understanding of the present invention a method of using of at least two different transmission standards in a broadcast receiving device, said broadcast receiving device comprising a switching device and the switching device switches at defined switching conditions between the different transmission standards, will now be described by way of example, with reference to the accompanying drawings.

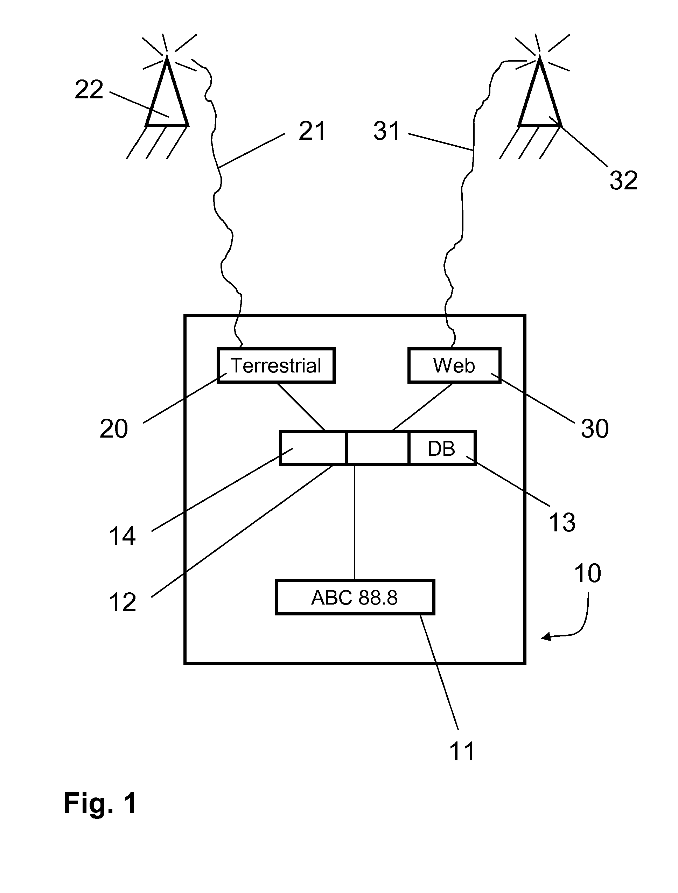

Shown is in
- Figure 1: a schematic view of a broadcast receiving device comprising a switching device for switching between two different transmission standards.

In Figure 1 a broadcast receiving device 10 is shown. The broadcast receiving device 10 contains a display 11, where the name of the currently used radio station is displayed. In Figure 1 a radio station ABC 88.8 is displayed, whereas ABC is the name of the radio station and 88.8 is the current frequency of the radio station. The broadcast receiving device 10 also comprises a switching device 12 including a database 13, a terrestrial transmission module 20 and a web-based transmission module 30. The terrestrial transmission module 20 is wirelessly connected via the terrestrial transmission standard 21 with a terrestrial transmission station 22. Furthermore the web-based transmission module 30 is also connected wirelessly via the web-based transmission standard 31 with a web-based transmission station 32.

Via the terrestrial transmission standard 21 conventional radio programmes can be received. Via the web-based transmission standard 31 access to the World Wide Web, the so-called internet is possible.

Comprising a terrestrial transmission module 20 and a web-based transmission module 30 the broadcast receiving device 10 can be called a FM-and-Web-Radio unit.

While a person for example drives from location A to location B the person is listening via terrestrial transmission standard 21 ABC 88.8 radio, displayed on the display 11 of the broadcast receiving device 10. For listening ABC 88.8 via terrestrial transmission standard 21 the switching device 12 connected to the terrestrial transmission standard 21. Simplified said, the terrestrial transmission standard 21 is used and the web-based transmission standard 31 is not in use. So, for the reproduction of the audio signal the terrestrial transmission standard 21 is used.

While driving from location A to location B, the broadcast receiving device 10 scans via the terrestrial transmission module 20 all FM channels available including those listed in the RDS signal of the ABC 88.8 radio station for identifying the station label of ABC 88.8. Additionally, the strength and/or the quality of the received signal transmitted via the terrestrial transmission standard 21 is detected by the switching device 12, preferably within the broadcast transmission device 10.

If the person is leaving the ABC 88.8 region on the way to location B it is possible that the signal strength, the FM signal, of the received ABC 88.8 radio gets weak. Detecting a signal of the ABC 88.8 radio station with a weaker strength received via the terrestrial transmission standard 21 the broadcast receiving device 10 starts accessing the World Wide Web by the web-based transmission module 30 via the web-based transmission standard 31.

The broadcast receiving device 10 retrieves or receives via the web-based transmission standard 31 at the web-based transmission station 32 the corresponding signal for ABC 88.8.

Retrieving or receiving the corresponding signal for ABC 88.8 from the web-based transmission station 32 the broadcast receiving device 10 can save the signal from the web-based transmission module 30 in the database 13 in the switching device 12 while still using the signal received from the terrestrial transmission module 20.

While saving the web-based signal a matching mechanism in the broadcast receiving device 10 synchronizes the received signal from the terrestrial transmission standard 21 and the web-based transmission standard 31. If the signal strength of the terrestrial transmission standard 21further decreases the switching device 12 can switch from the terrestrial or FM signal to the web-based signal so that the switching procedure from one to the other source can be achieved without distortion in the audio signal.

The broadcast receiving device 10 can, based on the received RDS information via the terrestrial transmission standard 21, access the World Wide Web via an online module 14 which is preferably part of the switching device 12.By use of online module 33 the broadcast receiving device 10 can search for the corresponding content and the identification label of ABC 88.8 radio.

When the signal strength gets weaker and a switching procedure should be performed to continue listening to ABC 88.8 the switching device 12 can ask for a switching confirmation displayed on the display 11 of the broadcast receiving device 10.

When returning from location B to location A and the person still listens to ABC 88.8 the broadcast receiving device 10 may scan for the RDS signal of that particular radio station and offer a switch back to FM if available.

If the person travels at a later time again from location A to location B and listens again ABC 88.8 radio the switching device 12 can use the identification label in the World Wide Web of ABC 88.8 radio which was already detected at the first time and for such a case stored in the database 13. If the identification label linked to the radio station in the terrestrial transmission standard 21 and the corresponding address of the identification label linked to the web-based transmission standard 31 are already available and stored in the database 13, the switching device 12 can faster switch between terrestrial transmission standard 21 and web-based transmission standard 31 and vice versa.

### List of reference numerals

- 10: Broadcast receiving device

- 11: Display
- 12: Switching device
- 13: Database
- 14: Online module

- 20: Terrestrial transmission module
- 21: Terrestrial transmission standard
- 22: Terrestrial transmission station

- 30: Web-based transmission module
- 31: Web-based transmission standard
- 32: Web-based transmission station

## Claims

1. A method of using of at least two different transmission standards (21, 31) in a broadcast receiving device (10) **characterised in that** the broadcast receiving device (10) comprises a switching device (12), and that the switching device (12) switches at defined switching conditions between the different transmission standards (21, 31).

2. The method according to claim 1, **characterised in that** the switching device (12) switches at defined switching conditions between the different transmission standards (21, 31) automatically or upon request.

3. The method according to anyone of claims 1 or 2, **characterised in that** switching device (12) switches between contents within the different transmission standards (21, 31).

4. The method according to anyone of claims 1 to 3, **characterised in that** the switching conditions are generated by comparing at least one defined threshold value to at least one detected switching parameter value.

5. The method according to anyone of claims 1 to 4, **characterised in that** the defined threshold values are set manually and/or received and/or retrieved and/or delivered via at least one transmission standard.

6. The method according to claim 4 and 5, **characterised in that** the threshold value is a value relating to the signal strength and/or a value relating to the signal to noise ratio and/or a value relating to the time and/or a value relating to a geographical location.

7. The method according to anyone of claims 4 to 6, **characterised in that** the switching device (12) detects switching parameter values of at least one first transmission standard (21, 31), that the switching device compares the detected switching parameter values against at least one threshold value related to said first transmission standard (21, 31) and that the switching device switches to at least one second transmission standard (21, 31) if the detected switching parameter values fall below or exceed or correspond to at least one threshold value related to said first transmission standard (21, 31).

8. The method according to anyone of claims 4 to 6, **characterised in that** the switching device (12) detects switching parameter values of at least one first transmission standard (21, 31), that the switching device (12) compares the detected switching parameter values against at least one threshold value related to said first transmission standard (21, 31) and that the switching device (12) switches from at least one second transmission standard (21, 31) to said first transmission standard (21, 31) if the detected switching parameter values fall below or exceed or correspond to at least one threshold value related to said first transmission standard (21, 31).

9. The method according to anyone of claims 1 to 8, **characterised in that** the method is used for switching between terrestrial and web-based transmission standards (21, 31).

10. The method according to claim 9, **characterised in that** the switching device (12) retrieves and/or receives identification labels of contents related to the terrestrial transmission standard (21, 31), that the switching device (12) retrieves and/or receives identification labels of contents related to the web-based transmission standard (21, 31) and that the switching device (12) switches at defined switching conditions between identical or corresponding contents related to the terrestrial and web-based transmission standards (21, 31) according to their identification labels.

11. The method according to anyone of claims 9 or 10, **characterised in that** the switching device (12) comprises an online module (14), that the switching device (12) accesses the internet via the online module (14) and that the switching device (12) retrieves and/or receives identification labels of contents related to the web-based transmission standard (21, 31).

12. The method according to anyone of claims 3 to 11, **characterised in that** the
switching device (12) comprises a database (13) and that the identification labels of contents related to at least one of the two transmission standards (21, 31) are stored within this database (13).

13. A switching device (12) for switching between different transmission standards (21, 31), said switching device (12) comprising an interface to each transmission standard (21, 31) and means for switching at defined switching conditions between the different transmission standards (21, 31).

14. The switching device (12) according to claim 13 **characterised in that** it
comprises means for performing the method according to anyone of claims 1 to 12.

15. A broadcast receiving device (10) comprising a switching device according to
anyone of claims 13 or 14.
